# EUROPEAN PATENT SPECIFICATION

(11) **EP 2 509 229 B1**
(45) Date of publication and mention of the grant of the patent: **25.02.2015**
(21) Application number: 11161218.0
(22) Date of filing: 05.04.2011
(51) Int. Cl.: H04B 1/38

(54) **Mobile wireless communications device with proximity based transmitted power control and related methods**
Mobile Drahtloskommunikationsvorrichtung mit aus Näherungsbasis übertragene Leistungssteuerung und zugehörige Verfahren
Dispositif de communications sans fil mobiles avec un contrôle de la puissance transmise basée sur la proximité et procédés correspondants

(43) Date of publication of application: 10.10.2012
(73) Proprietor: BlackBerry Limited, Waterloo, ON N2K 0A7 (CA)
(72) Inventor: Brogle, Richard James, Waterloo Ontario N2L 5R9 (CA); Ho, Tommy Chun Wah, Waterloo Ontario N2L 5R9 (CA); Gautier, Roberto, Sunrise, FL 33323 (US)
(74) Representative: Bryn-Jacobsen, Caelia

(56) References cited:
- EP-A1- 0 752 735
- WO-A1-2009/149023
- US-A1- 2007 238 496
- US-B1- 6 456 856

## Description

### Technical Field

The present disclosure generally relates to the field of wireless communications systems, and, more particularly, to mobile wireless communications devices and related methods.

### Background

Mobile wireless communications systems continue to grow in popularity and have become an integral part of both personal and business communications. For example, cellular telephones allow users to place and receive voice calls almost anywhere they travel. Moreover, as cellular telephone technology has increased, so too has the functionality of cellular devices and the different types of devices available to users. For example, many cellular devices now incorporate personal digital assistant (PDA) features such as calendars, address books, task lists, etc. Moreover, such multi-function devices may also allow users to wirelessly send and receive electronic mail (email) messages and access the Internet via a cellular network and/or a wireless local area network (WLAN), for example.

Even so, as the functionality of cellular communications devices continues to increase, so too does the demand for smaller devices which are easier and more convenient for users to carry. One challenge this poses for cellular device relatively small phone, it may be increasingly difficult for cellular device manufacturers to comply with certain requirements. For example, for a relatively small phone having an internal antenna, the antenna may be in relatively close proximity to the user's face or cheek, which may make complying with applicable SAR and/or hearing aid compatibility (HAC) requirements potentially difficult for manufacturers.

WO 2009/149023 is directed to an electronic device such as a portable electronic device may have an antenna and associated wireless communications circuitry. A sensor such as a proximity sensor may be used to detect when the electronic device is in close proximity to a user's head. Control circuitry within the electronic device may be used to adjust radio-frequency signal transmit power levels. When it is determined that the electronic device is within a given distance from the user's head, the radio-frequency signal transmit power level may be reduced. When it is determined that the electronic device is not within the given distance from the user's head, proximity-based limits on the radio-frequency signal transmit power level may be removed. Data may be gathered from a touch sensor, accelerometer, ambient light sensor and other sources for use in determining how to adjust the transmit power level.

US 2007/0238496 is directed to a system for providing an adaptive antenna system in a mobile communications device is disclosed. An array of antenna elements is provided. A sensing component is disposed along a surface of the mobile communications device, proximal to the array of antenna elements. A processor component is communicatively coupled to the sensing component. An implementation element is communicatively coupled to the processor component, and to the array of antenna elements.

The sensor component generates data characterizing the proximity of a foreign object to the array of antenna elements; which the processing component uses to determine a configuration for the array of antenna elements. The implementation element modifies the array of antenna elements, responsive to the configuration determined by the processor component.

US 6,456,856 is directed to a radio communication apparatus including a transceiver coupled to an antenna structure with many directional antennas that form a radiation pattern. The antenna structure gives greater importance to certain directions of transmission. A power regulation device is controlled by a control element for modifying the radiation pattern. The control element includes switches for selectively activating/deactivating the directional antennas to modify the radiation pattern. A proximity detection device measures at least one proximity parameter and feeds the control element with a proximity indication for controlling the power regulation device to reduce the radiation pattern in the direction of the radio communication apparatus user. The proximity detection device includes ahumidity and/or a temperature detector.

EP 0752735 is directed to a antenna system including several antennas (1a-1j) which are attached to or integrated in the housing (2-7) of the mobile telephone. The high frequency power emitted from each antenna is individually controllable. The antennas are pref. formed as planar antennas and the resistance of each antenna is measured by an impedance sensor. The power emitted from each antenna is regulated by an associated damping element. Alternatively, the power may be regulated by associated switch elements. The power is regulated depending on the measured resistance. A control unit is pref. provided to carry out all necessary measuring and control functions.

### Statement of invention

The present invention is set out in the independent claims, with some optional features set out in the claims dependent thereto.

### Brief Description of the Drawings

FIG. 1 is a top plan view of a mobile wireless communications device in accordance with one example embodiment.
FIG. 2 is a schematic block diagram of the device of FIG. 1.
FIGS. 3a-3b are diagrams illustrating operation of the device in FIG. 1 adjacent and removed from the human user's head, respectively.
FIG. 4 is a schematic block diagram of another embodiment of a mobile wireless communications device in accordance with an example embodiment.
FIG. 5 is a schematic block diagram illustrating additional components that may be included in the mobile wireless communications device of FIG. 1.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

In accordance with one exemplary aspect, a mobile wireless communications device may include a portable housing, at least one antenna carried by the portable housing, and at least one capacitive proximity sensor carried by the portable housing and configured to sense proximity of a human user adjacent thereto, for example. The mobile wireless communications device may also include a wireless transmitter carried by the portable housing and coupled to the at least one antenna, and a controller carried by the portable housing and coupled to the wireless transmitter and the at least one capacitive proximity sensor. The controller may be configured to cooperate with the wireless transmitter to adjust transmitted power output from the at least one antenna based upon the at least one capacitive proximity sensor, for example.

The at least one antenna may include a plurality of antennas. The at least one capacitive proximity sensor may include a plurality of capacitive proximity sensors corresponding to the plurality of antennas. The controller may be configured to cooperate with the wireless transmitter to adjust the transmitted power output at each of the plurality of antennas based upon a corresponding one of the plurality of capacitive proximity sensors, for example.

The mobile wireless communications may further include a display carried by the portable housing and coupled to the controller. The at least one capacitive sensor may include at least one capacitive proximity sensor on the display, for example.

The controller may be configured to adjust the transmitted power output to a reduced power level based upon sensing the human user immediately adjacent the at least one capacitive proximity sensor. Alternatively or additionally, the controller may be configured to adjust the transmitted power output to a full power level based upon sensing the human user spaced apart from the at least one capacitive proximity sensor, for example.

The at least one antenna and the at least one capacitive proximity sensor may be adjacent one another. The mobile wireless communications device may further include a substrate carrying the at least one antenna and the at one capacitive proximity sensor. The wireless transmitter comprises a cellular transmitter, for example.

A method aspect is directed to a method of adjusting transmitted power output from at least one antenna of a mobile wireless communications device that includes a portable housing carrying the at least one antenna, at least one capacitive proximity sensor, a wireless transmitter coupled to the at least one antenna, and a controller coupled to the wireless transmitter and the at least one capacitive proximity sensor. The method may include using the at least one capacitive sensor to sense proximity of a human user adjacent thereto, for example. The method may also include using the controller to cooperate with the wireless transmitter to adjust transmitted power output from the at least one antenna based upon the at least one capacitive proximity sensor, for example.

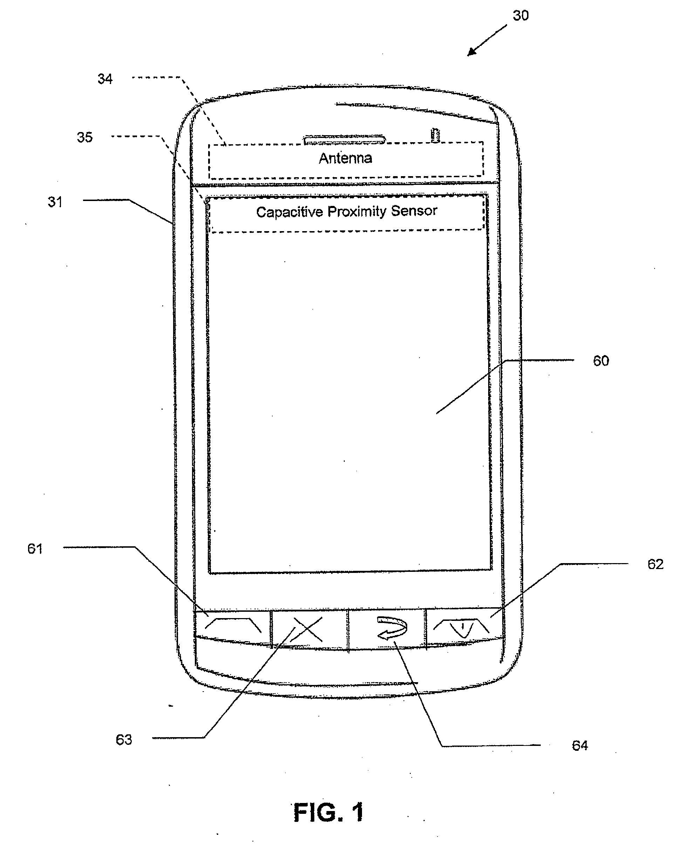

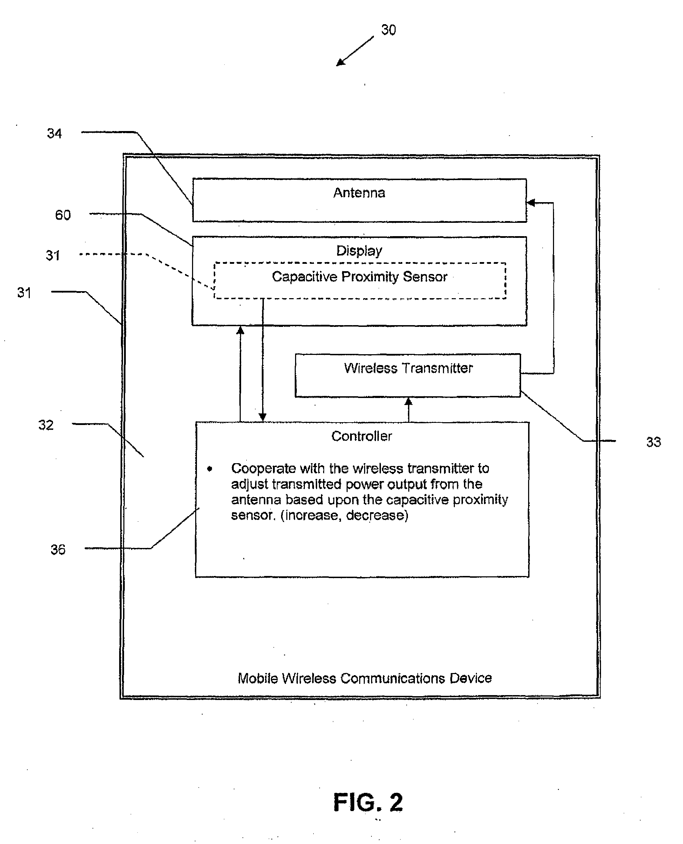

Referring now to FIGS. 1-3, a mobile wireless communications device **30** illustratively includes a portable housing **31**. The portable housing **31** includes upper and lower portions. The mobile wireless communications device **30** also includes a substrate **32** also carried by the portable housing **31**. The substrate **32** may be printed circuit board (PCB), for example, and may carry the components described herein. In some embodiments, not shown, where the substrate **32** is a PCB, the PCB may be replaced by or used in conjunction with a metal chassis or other substrate, for example a flexible substrate. The substrate **32** may also include a conductive layer (not shown) defining a ground plane.

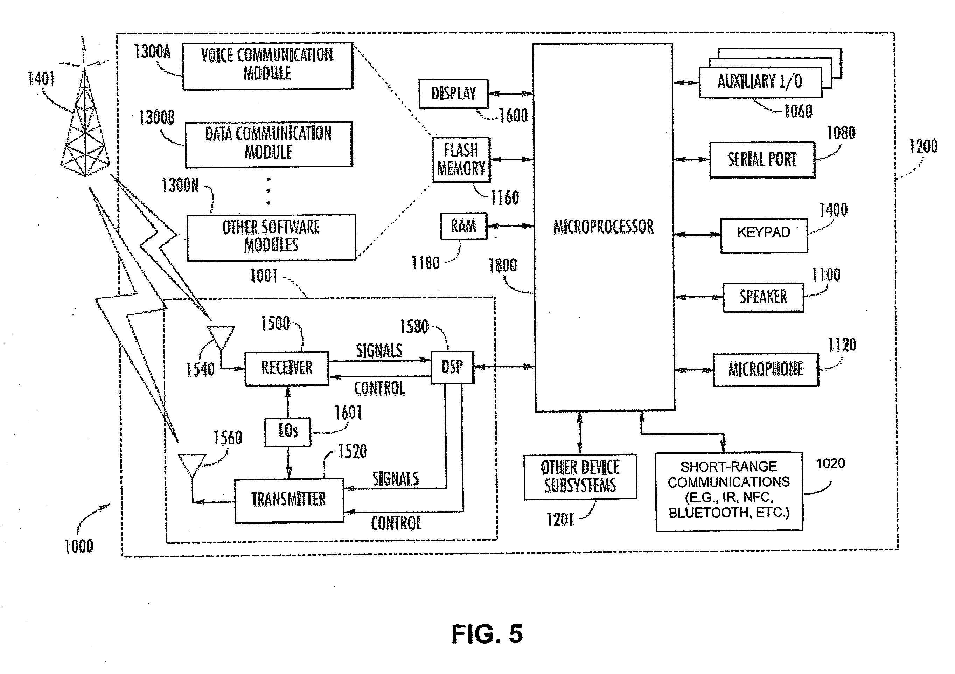

The exemplary device **30** further illustratively includes a display **60** and a plurality of control keys including an "off hook" (i.e., initiate phone call) key **61,** an "on hook" (i.e., discontinue phone call) key **62,** a menu key **63,** and a return or escape key **64.** Operation of the various device components and input keys, etc., will be described further below with reference to FIG. 5. While the exemplary device **30** is a illustratively a mobile telephone, it will be appreciated by those skilled in the art the mobile wireless communications device may be another type of device, for example, a personal digital assistant (PDA), or a tablet personal computer.

A wireless transmitter **33** is carried by the portable housing **31.** The wireless transmitter **33** may be cellular transmitter, for example. The wireless transmitter **33** may be another type of transmitter, for example, a wireless local area network (WLAN) transmitter, for example. Of course, the mobile wireless communications device **30** may include more than one wireless transmitter **33,** and additional wireless communications circuitry, for example, wireless receivers, as will be appreciated by those skilled in the art.

The mobile wireless communications device **30** also includes an antenna **34** carried by the portable housing **31** and coupled to the wireless transmitter **33.** The antenna **34** is illustratively carried by the upper portion of the portable housing **31**. The antenna **34** may be carried by other part of the portable housing **31**, for example, the lower portion. The type of antenna **34** may correspond to the type of wireless transmitter **33**, for example. In other words, the antenna **34** may be configured to operate in the cellular frequency band. Additionally, the antenna **34** may be configured to operate in more than one frequency band, which may include, for example, the cellular frequency band, global positioning system (GPS) band, WLAN frequency band, and/or other frequency bands.

The mobile wireless communications device **30** also includes a capacitive proximity sensor **35** carried by the portable housing **31** and adjacent the antenna **34**. More particularly, the capacitive proximity sensor **35** is on the display **60**, for example, and the display may be a "touch screen display." The capacitive proximity sensor **35** may be aligned with the antenna **34**. The capacitive proximity sensor **35** is configured to sense proximity of a human user **37** adjacent thereto. In other words, the capacitive sensing used for the touch screen display may also be used for sensing the proximity of the human user **37** adjacent thereto. As will be appreciated by those skilled in the art, the capacitive proximity sensor **35** may not be carried by or on the display **60**, and may be carried elsewhere in the portable housing **31**.

A controller **36** is carried by the portable housing **31** and coupled to the wireless transmitter **33** and the capacitive proximity sensor **35**. The controller **36** may be implemented using hardware (e.g., memory, etc.) and software components, i.e., computer-readable instructions for causing the mobile device **30** to perform the various functions or operations described herein.

The controller **36** is configured to cooperate with the wireless transmitter **33** to adjust transmitted power output from the antenna **34** based upon the capacitive proximity sensor **35.** In other words, the controller **36**, based upon the sensed proximity of a human user **37**, advantageously adjusts the transmitted power output. For example, the controller **36** is configured to reduce the transmitted power output to a reduced power level based upon sensing the human user **37** immediately adjacent the capacitive proximity sensor **35**. This may be particularly advantageous to reduce the human user's exposure to radio frequency (RF) radiation to within acceptable limits, and thus increase SAR compliance. Additionally, RF performance degradation may be reduced. The controller **36** may also adjust the transmitted power output based upon the gain pattern of the antenna **34**.

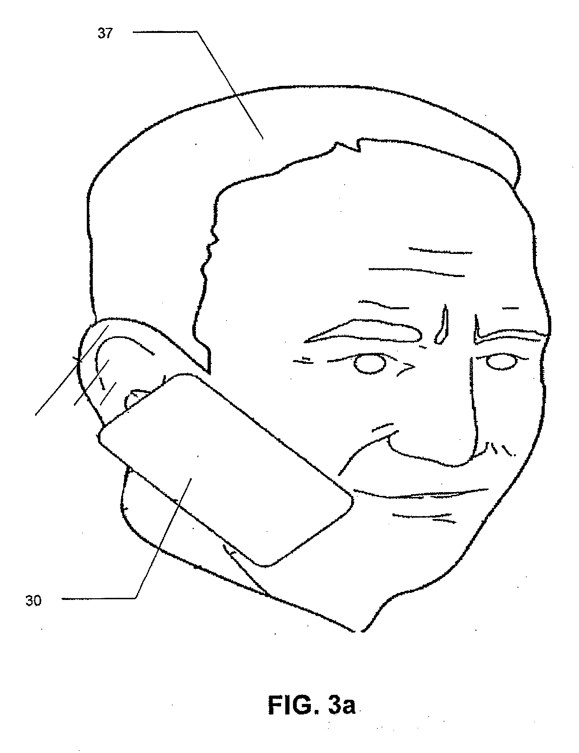

By way of example, suppose the mobile wireless communications device **30** is spatially separated from the human user, for example, on a table. The controller **36** cooperates with the wireless transmitter **33** to operate a maximum transmitted power output from the antenna **34**. Upon the mobile wireless communications device **30** receiving a call, for example, the human user **37** picks up the device and places it adjacent their head (i.e. touching their cheek and ear or having a relatively small distance between their head and the device **30**, for example, less than 6 inches) (FIG. 3a). The controller **36** cooperates with the wireless transmitter **33** to reduce the transmitted power output, for example, to an acceptable level to meet SAR requirements, for the given proximity of the human user to the capacitive proximity sensor **35** and the adjacent antenna **34**.

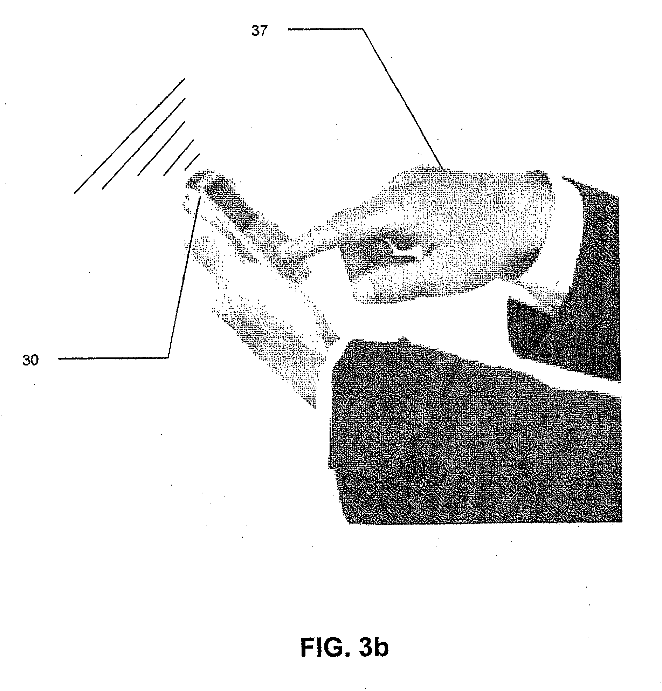

The controller **36** is also configured to increase the transmitted power output to within a threshold power level based upon sensing the human user **37** being separated from the capacitive proximity sensor **35** (FIG. 3b). By way of the above example, suppose the human user **37** places the call on "speakerphone" or begins to write an email or type a text message, the human user will typically remove the mobile wireless communications device **30** from adjacent their head to an arm's length distance, for example, 24 to 30 inches. The capacitive proximity sensor **35** detects that it is no longer adjacent the human user **37**. The controller **36** cooperates with the wireless transmitter **33** to increase the transmitted power output, for example, to an acceptable level or full power level, to meet SAR requirements, for the given proximity of the human user **37** to the capacitive proximity sensor **35** and the adjacent antenna **34**. Other distances detected by the capacitive proximity sensor **35** may correspond to other transmitted power levels as will be appreciated by those skilled in the art.

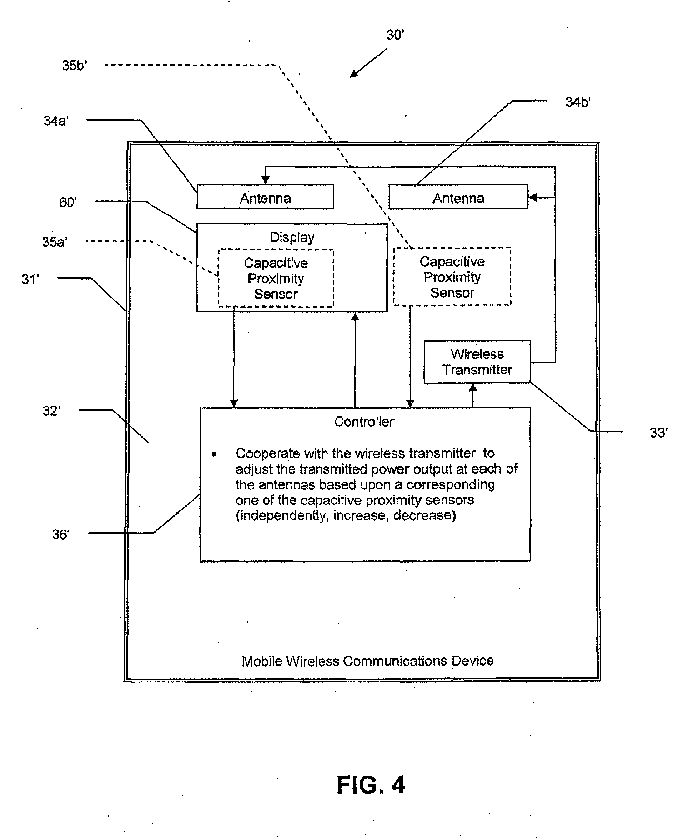

Referring now to FIG. 4, in another example embodiment, the mobile wireless communications device **30**' includes multiple antennas **34a**'**-34b**' carried by the upper portion of the portable housing **31**'**.** The antennas **34a**'**-34b**' may be carried by different portions of the portable housing **31**'. For example, an antenna **34a**' may be carried by the top portion of the portable housing **31**', while the second antenna **34b**' may be carried by the bottom portion of the portable housing. Of course, the mobile wireless communications device **30**' may include more than two antennas, and they may be carried by the same portion of the portable housing **31**'**.**

The mobile wireless communications device **30**' also includes multiple capacitive proximity sensors **35a**'**-35b**'**.** One capacitive proximity sensor **35a**' is carried by the display 60', and another capacitive proximity sensor **35b**' is not carried by the display. Of course, both capacitive proximity sensors **35a**'-**35b**' may be carried by the display **60**', or none of the capacitive proximity sensors may be carried by the display. The capacitive proximity sensors **35a**'**-35b**' correspond to the antennas **34a**'**-34b**'. In some embodiments, additional proximity sensors may be used in conjunction with the capacitive proximity sensors **35a**'**-35b**', and may be another type of proximity sensor, for example, they may be infrared and/or voltage standing wave ratio (VSWR) based. The capacitive proximity sensors **35a**'**-35b**' may be carried elsewhere by the portable housing **31**' and adjacent corresponding ones of the antennas **34a**'**-34b**'.

The controller **36**' is configured to cooperate with the wireless transmitter **33**' to adjust the transmitted power output at each of the antennas **34a**'**-34b**' based upon a corresponding one of the capacitive proximity sensors **35a**'**-35b**'**.** In some embodiments, the controller **36**' may adjust each of the antennas **34a**'**-34b**' independently.

As will be appreciated by those skilled in the art, a base station (not shown) may set or adjust the overall power level for the device **30**' or all the antennas **34a**'**-34b**' to permit frequency reuse in adjacent cells. Additionally, the antennas **34a**'**-34b**' may have different gain patterns. Thus, the controller **36**' may further adjust the transmitted power of each of the antennas **34a**'**-34b**' based upon a corresponding one of the capacitive proximity sensors **35a**'**-35b**', and/or the different gain patterns, for example.

A method aspect is directed to a method of adjusting transmitted power output from an antenna **34** of a mobile wireless communications device **30** that includes a portable housing **31** carrying the antenna, a capacitive proximity sensor **35**, a wireless transmitter **33** coupled to the antenna **34**, and a controller **36** coupled to the wireless transmitter and the capacitive proximity sensor. The method includes using the capacitive sensor **35** to sense proximity of a human user adjacent thereto. The method also includes using the controller **36** to cooperate with the wireless transmitter **33** to adjust transmitted power output from the antenna **33** based upon the capacitive proximity sensor **35**.

Example components of a mobile wireless communications device **1000** that may be used in accordance with the above-described embodiments are further described below with reference to FIG. 5. The device **1000** illustratively includes a housing **1200**, a keyboard or keypad **1400** and an output device **1600**. The output device shown is a display **1600**, which may comprise a full graphic LCD. Other types of output devices may alternatively be utilized. A processing device **1800** is contained within the housing **1200** and is coupled between the keypad **1400** and the display **1600**. The processing device **1800** controls the operation of the display **1600**, as well as the overall operation of the mobile device **1000**, in response to actuation of keys on the keypad **1400**.

The housing **1200** may be elongated vertically, or may take on other sizes and shapes (including clamshell housing structures). The keypad may include a mode selection key, or other hardware or software for switching between text entry and telephony entry.

In addition to the processing device **1800**, other parts of the mobile device **1000** are shown schematically in FIG. 5. These include a communications subsystem **1001**; a short-range communications subsystem **1020**; the keypad **1400** and the display **1600**, along with other input/output devices **1060**, **1080**, **1100** and **1120**; as well as memory devices **1160**, **1180** and various other device subsystems **1201**. The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160**, but may be stored in other types of memory devices, such as a read only memory (ROM) or similar storage element. In addition, system software, specific device applications, or parts thereof, may be temporarily loaded into a volatile store, such as the random access memory (RAM) **1180**. Communications signals received by the mobile device may also be stored in the RAM **1180**.

The processing device **1800**, in addition to its operating system functions, enables execution of software applications **1300A-1300N** on the device 1000. A predetermined set of applications that control basic device operations, such as data and voice communications **1300A** and **1300B**, may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401**. The PIM data items may be seamlessly integrated, synchronized and updated via the wireless network **1401** with corresponding data items stored or associated with a host computer system.

Communication functions, including data and voice communications, are performed through the communications subsystem **1001**, and possibly through the short-range communications subsystem. The communications subsystem **1001** includes a receiver **1500**, a transmitter **1520**, and one or more antennas **1540** and **1560**. In addition, the communications subsystem **1001** also includes a processing module, such as a digital signal processor (DSP) **1580**, and local oscillators (LOs) **1601**. The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000**. The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560**.

In addition to processing communications signals, the DSP **1580** provides for control of the receiver **1500** and the transmitter **1520**. For example, gains applied to communications signals in the receiver **1500** and transmitter **1520** may be adaptively controlled through automatic gain control algorithms implemented in the DSP **1580**.

In a data communications mode, a received signal, such as a text message or web page download, is processed by the communications subsystem **1001** and is input to the processing device **1800**. The received signal is then further processed by the processing device **1800** for an output to the display **1600**, or alternatively to some other auxiliary I/O device **1060**. A device may also be used to compose data items, such as e-mail messages, using the keypad **1400** and/or some other auxiliary I/O device **1060**, such as a touchpad, a rocker switch, a thumb-wheel, or some other type of input device. The composed data items may then be transmitted over the communications network **1401** via the communications subsystem **1001**.

In a voice communications mode, overall operation of the device is substantially similar to the data communications mode, except that received signals are output to a speaker **1100**, and signals for transmission are generated by a microphone **1120**. Alternative voice or audio I/O subsystems, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A mobile wireless communications device (30') comprising:
a portable housing (31');
a display (60') carried by the portable housing;
a plurality of antennas (34a', 34b') carried by said portable housing;
a respective capacitive proximity sensor (35a', 35b') corresponding to each of said plurality of antennas, carried by said portable housing, and configured to sense proximity of a human user (37') immediately adjacent thereto, at least one of said respective capacitive proximity sensors (35a') being on said display;
a wireless transmitter (33') carried by said portable housing and coupled to said plurality of antennas; and
a controller (36') carried by said portable housing and coupled to said wireless transmitter, said display, and said respective capacitive proximity sensors, and configured to cooperate with said wireless transmitter to adjust transmitted power output at each of said plurality of antennas to a reduced power level based
upon sensing the human user immediately adjacent the respective capacitive proximity sensor.

2. The mobile wireless communications device of Claim 1, wherein said controller is configured to adjust the transmitted power output to below a reduced power level based upon sensing the human user immediately adjacent at least one of said respective capacitive proximity sensors.

3. The mobile wireless communications device of Claim 1, wherein each of said plurality of antennas and its respective capacitive proximity sensor are adjacent one another.

4. The mobile wireless communications device of Claim 1, further comprising a substrate (32') carrying said plurality of antennas and said respective capacitive proximity sensors.

5. The mobile wireless communications device of Claim 1, wherein said wireless transmitter comprises a cellular transmitter.

6. A method of adjusting transmitted power output from a plurality of antennas (34a', 34b') of a mobile wireless communications device (30') comprising a portable housing (31') carrying the plurality of antennas, a display (60'), a respective capacitive proximity sensor (35a', 35b') corresponding to each of the plurality of antennas, a wireless transmitter (33') coupled to the plurality of antennas, and a controller (36') coupled to the wireless transmitter, the display, and the respective capacitive proximity sensors, at least one of the respective capacitive proximity sensors being on the display, the method comprising:
using the respective capacitive proximity sensors to sense proximity of a human user (37') immediately adjacent thereto; and
using the controller to cooperate with the wireless transmitter to adjust transmitted power output at each of the plurality of antennas to a reduced power level based upon sensing the human user immediately adjacent its respective capacitive proximity sensor.

7. The method of Claim 7, wherein each of the plurality of antennas and its respective capacitive proximity sensor are adjacent one another.

8. The method of Claim 7, wherein the wireless transmitter comprises a cellular transmitter.

## Patentansprüche

1. Eine mobile drahtlose Kommunikationsvorrichtung (30'), umfassend:
ein tragbares Gehäuse (31');
eine Anzeige (60'), die von dem tragbaren Gehäuse getragen wird;
eine Vielzahl von Antennen (34a', 34b'), die von dem tragbaren Gehäuse getragen werden;
einen jeweiligen kapazitiven Näherungssensor (35a', 35b'), der zu jeder der Vielzahl von Antennen korrespondiert, der von dem tragbaren Gehäuse getragen wird und konfiguriert ist, um eine Nähe eines menschlichen Benutzers (37') direkt daran benachbart wahrzunehmen,
wobei zumindest einer der entsprechenden kapazitiven Näherungssensoren (35a') auf der Anzeige ist;
einen drahtlosen Überträger (33'), der von dem tragbaren Gehäuse getragen wird und mit der Vielzahl von Antennen gekoppelt ist; und
eine Steuerung (36'), die von dem tragbaren Gehäuse getragen wird und mit dem drahtlosen Überträger, der Anzeige und dem entsprechenden kapazitiven Näherungssensor gekoppelt ist, und
konfiguriert ist, um mit dem drahtlosen Überträger zu kooperieren, um eine übertragene Leistungsabgabe an jeder der Vielzahl von Antennen auf ein reduziertes Leistungsniveau zu justieren, basierend darauf, dass der menschliche Benutzer direkt benachbart zu dem entsprechenden kapazitiven Näherungssensor wahrgenommen wird.

2. Die mobile drahtlose Kommunikationsvorrichtung nach Anspruch 1, wobei die Steuerung konfiguriert ist, um die übertragene Leistungsabgabe auf Unterhalb eines reduzierten Leistungsniveaus zu justieren, basierend darauf, dass der menschliche Benutzer direkt benachbart zu zumindest einem der kapazitiven Näherungssensoren wahrgenommen wird.

3. Die mobile drahtlose Kommunikationsvorrichtung nach Anspruch 1, wobei jede aus der Vielzahl von Antennen und ihr entsprechender kapazitiver Näherungssensor benachbart zueinander sind.

4. Die mobile drahtlose Kommunikationsvorrichtung nach Anspruch 1, ferner umfassend ein Substrat (32'), das die Vielzahl von Antennen und die entsprechenden kapazitiven Näherungssensoren trägt.

5. Die mobile drahtlose Kommunikationsvorrichtung nach Anspruch 1, wobei der drahtlose Überträger einen zellularen Überträger umfasst.

6. Ein Verfahren zum Justieren von übertragener Leistungsabgabe von einer Vielzahl von Antennen (34a', 34b') einer mobilen drahtlosen Kommunikationsvorrichtung (30'), die ein tragbares Gehäuse (31') umfasst, das die Vielzahl der Antennen, eine Anzeige (60'), einen jeweiligen kapazitiven Näherungssensor (35a', 35b'), der mit jeder aus der Vielzahl der Antennen korrespondiert, einen drahtlosen Überträger (33'), der mit der Vielzahl von Antennen gekoppelt ist, und eine Steuerung (36') trägt, die mit dem drahtlosen Überträger, der Anzeige und dem entsprechenden kapazitiven Näherungssensor gekoppelt ist, wobei zumindest einer der entsprechenden kapazitiven Näherungssensoren auf der Anzeige ist, wobei das Verfahren umfasst:
Benutzen der entsprechenden kapazitiven Näherungssensoren, um eine Nähe eines menschlichen Benutzers (37') direkt dazu benachbart wahrzunehmen; und
Benutzen der Steuerung, um mit dem drahtlosen Überträger zu kooperieren, um eine übertragene Leistungsabgabe an jeder der Vielzahl von Antennen auf ein reduziertes Leistungsniveau zu justieren,
basierend darauf, dass der menschliche Benutzer direkt benachbart zu ihrem entsprechenden kapazitiven Näherungssensor wahrgenommen wird.

7. Das Verfahren nach Anspruch 7, wobei jede der Vielzahl der Antennen und ihr entsprechender kapazitiver Näherungssensor zueinander benachbart sind.

8. Das Verfahren nach Anspruch 7, wobei der drahtlose Überträger einen zellularen Überträger umfasst.

## Revendications

1. Dispositif de communication mobile sans fil (30') comprenant :
un boîtier portatif (31') ;
un écran d'affichage (60') supporté par le boîtier portatif ;
une pluralité d'antennes (34a', 34b') supportées par ledit boîtier portatif ;
un capteur de proximité capacitif (35a', 35b') respectif correspondant à chacune des antennes parmi ladite pluralité d'antennes, supporté par ledit boîtier portatif et configuré pour détecter la proximité d'un utilisateur humain (37') immédiatement adjacent, au moins un desdits capteurs de proximité capacitifs respectifs (35a') étant sur ledit écran d'affichage ;
un émetteur sans fil (33') supporté par ledit boîtier portatif et couplé à ladite pluralité d'antennes ; et
un contrôleur (36') supporté par ledit boîtier portatif, couplé audit émetteur sans fil, audit écran d'affichage et auxdits capteurs de proximité capacitifs respectifs et configuré pour coopérer avec ledit émetteur sans fil afin d'ajuster la puissance d'émission de sortie de chaque antenne parmi ladite pluralité d'antennes à un niveau de puissance réduit après avoir détecté que l'utilisateur humain est immédiatement adjacent au capteur de proximité capacitif respectif.

2. Dispositif de communication mobile sans fil selon la revendication 1, dans lequel ledit contrôleur est configuré pour ajuster la puissance d'émission de sortie au-dessous d'un niveau de puissance réduit après avoir détecté que l'utilisateur humain est immédiatement adjacent à au moins un desdits capteurs de proximité capacitifs respectifs.

3. Dispositif de communication mobile sans fil selon la revendication 1, dans lequel chaque antenne parmi ladite pluralité d'antennes et son capteur de proximité capacitif respectif sont adjacents l'un à l'autre.

4. Dispositif de communication mobile sans fil selon la revendication 1, comprenant en outre un substrat (32') supportant ladite pluralité d'antennes et lesdits capteurs de proximité capacitifs respectifs.

5. Dispositif de communication mobile sans fil selon la revendication 1, dans lequel ledit émetteur sans fil est constitué d'un émetteur cellulaire.

6. Procédé d'ajustement de la puissance d'émission de sortie à partir d'une pluralité d'antennes (34a', 34b') d'un dispositif de communication mobile sans fil (30') comprenant un boîtier portatif (31') supportant la pluralité d'antennes, un capteur de proximité capacitif (35a', 35b') respectif correspondant à chacune des antennes parmi ladite pluralité d'antennes, un émetteur sans fil (33') couplé à ladite pluralité d'antennes et un contrôleur (36') couplé à l'émetteur sans fil, à l'écran d'affichage et aux capteurs de proximité capacitifs respectifs, au moins un des capteurs de proximité capacitifs respectifs étant sur ledit écran d'affichage, le procédé comprenant les étapes consistant à :
utiliser les capteurs de proximité capacitifs respectifs pour détecter la proximité d'un utilisateur humain (37') qui est immédiatement adjacent ; et
utiliser le contrôleur pour coopérer avec l'émetteur sans fil afin d'ajuster la puissance d'émission de sortie de chaque antenne parmi ladite pluralité d'antennes à un niveau de puissance réduit après avoir détecté que l'utilisateur humain est immédiatement adjacent de son capteur de proximité capacitif respectif.

7. Procédé selon la revendication 7, dans lequel chaque antenne parmi ladite pluralité d'antennes et son capteur de proximité capacitif respectif sont adjacents l'un à l'autre.

8. Procédé selon la revendication 7, dans lequel ledit émetteur sans fil est constitué d'un émetteur cellulaire.
